# EUROPÄISCHE PATENTANMELDUNG

(11) **EP 2 436 496 A1**
(43) Veröffentlichungstag der Anmeldung: **04.04.2012**
(21) Anmeldenummer: 10185962.7
(22) Anmeldetag: 01.10.2010
(51) Int. Cl.: B28C 7/00, B28C 7/04, C04B 40/00, B01F 5/04, B01F 3/12

(54) **Mischeinrichtung für pumpfähige Gemische, insbesondere für Spritzbeton**

(71) Anmelder: Sika Technology AG, 6340 Baar (CH)
(72) Erfinder: Die Erfindernennung liegt noch nicht vor
(74) Vertreter: Sika Patent Attorneys

(57) **Zusammenfassung**

Eine Mischeinrichtung (100) zur Zudosierung eines Zusatzmittels (200) in ein pumpfähiges Gemischs (400), insbesondere ein pumpfähiges hydraulisch abbindendes Gemisch, im besonderen in eine flüssige Spritzbetonzusammensetzung, wobei die Mischeinrichtung (100) eine Förderleitung (110) zur Förderung des Gemischs (400) durch die Mischeinrichtung (100) aufweist, und eine mit der Förderleitung (110) kommunizierende Dosiervorrichtung (101) zum Einbringen des Zusatzmittels (200) in das Gemisch (400) angeordnet ist, zeichnet sich dadurch aus, dass die Dosiervorrichtung (101) über eine Vorrichtung (125a, 125b) zum Dispergieren des Zusatzmittels (200) in einem Trägermedium (300) verfügt, so dass das Zusatzmittel (200) im Trägermedium (300) fein verteilt vorliegend in das Gemisch (400) einbringbar ist.

## Beschreibung

### Technisches Gebiet

Die Erfindung betrifft eine Mischeinrichtung zur Zudosierung eines Zusatzmittels in ein pumpfähiges Gemischs, insbesondere ein pumpfähiges hydraulisch abbindendes Gemisch, im besonderen in eine flüssige Spritzbetonzusammensetzung, wobei die Mischeinrichtung eine Förderleitung zur Förderung des Gemischs durch die Mischeinrichtung aufweist, und eine mit der Förderleitung kommunizierende Dosiervorrichtung zum Einbringen des Zusatzmittels in das Gemisch angeordnet ist. Des Weiteren bezieht sich die Erfindung auf die Verwendung einer derartigen Mischvorrichtung sowie ein Verfahren zum Zudosieren eines Zusatzmittels in ein pumpfähiges Gemisch.

### Stand der Technik

Das Zudosieren bzw. Zumischen von kleinen Mengen eines Stoffes, z.B. eines Zusatzmittels in ein pumpfähiges Gemisch, tritt bei vielen Anwendungen auf. Eine gute Durchmischung ist, insbesondere bei heterogenen Gemischen mit Feststoffanteilen, jedoch oftmals schwierig zu erreichen. Üblicherweise eingesetzte statische Mischer, können durch die Feststoffanteile verstopfen und durch Abrasion rasch beschädigt oder gar zerstört werden.

Problematisch ist insbesondere die Zudosierung von Zusatzmitteln in hydraulisch abbindende Gemische, welche üblicherweise einen relativ hohen Feststoffanteil aus Sand, Kies und Zement aufweisen. Besonders anspruchsvoll ist das Zumischen von Zusatzmitteln bei der Verarbeitung von Spritzbeton. Vor dem Spritzen durchströmt der Spritzbeton mit hoher Geschwindigkeit eine Förderleitung mit aufgesetzter Spritzdüse. Notwendige Rezepturbestandteile, wie z.B. Wasser (bei Trockenspritzbeton), Druckluft und Zusatzmittel (z.B. Erstarrungsbeschleuniger) werden üblicherweise erst unmittelbar vor der Spritzdüse zudosiert. Die nun fertig zubereitete Spritzbetonmischung schiesst anschliessend unter hohem Druck auf die Aufragstelle und verdichtet sich dabei so stark, dass im Wesentlichen sofort eine fertig verdichtete Betonstruktur entsteht. Entsprechend werden für die Spritzbetonverarbeitung besonders effiziente und robuste Mischvorrichtungen benötigt.

Die EP 1 570 908 A1 (Sika Technology AG) offenbart diesbezüglich z.B. eine Spritzbetondüse zum Aufbringen von Nassspritzbeton oder Trockenspritzbeton. Die Düse verfügt über eine Vielzahl von seitlichen Kanälen zum Einbringen von Zusatzmitteln in den Spritzbeton.

In der DE 31 14 027 A1 (Aliva AG) ist des Weiteren eine Vorrichtung zum Auftragen von Spritzbeton mit einer Spritzdüse im Nassspritzverfahren beschrieben. Die Spritzdüse verfügt dabei über einen seitlichen Anschluss mit einem Dosierer, welcher zum Zumischen von speziellen Erstarrungsbeschleunigern in den Spritzbeton dient. Optional kann ein Teil des Erstarrungsbeschleunigers stromaufwärts in einer Abblaskammer zusammen mit Druckluft dem Spritzbeton zugegeben werden.

Wie sich gezeigt hat, wird mit den aus dem Stand der Technik bekannten Mischvorrichtungen jedoch üblicherweise eine relativ hohe Menge an Zusatzmittel benötigt, um eine ausreichend gleichmässige Verteilung und Wirkung im Spritzbeton zu erreichen. Dies beeinträchtigt die Wirtschaftlichkeit und belastet die Umwelt unnötigerweise. Es besteht daher nach wie vor Bedarf nach einem verbesserten Verfahren und einer effektiveren Mischvorrichtung zur Zudosierung eines Zusatzmittels in ein pumpfähiges Gemisch, insbesondere in Spritzbetonzusammensetzungen.

### Darstellung der Erfindung

Aufgabe der vorliegenden Erfindung ist es daher, eine dem eingangs genannten technischen Gebiet zugehörige Mischeinrichtung bereit zu stellen, welche eine effektivere Vermischung eines zuzudosierenden Zusatzmittels in ein pumpfähiges Gemisch, insbesondere in ein pumpfähiges hydraulisch abbindendes Gemisch, im Besonderen in eine flüssige Spritzbetonzusammensetzung, ermöglicht. Eine weitere Aufgabe besteht darin, ein entsprechendes Verfahren bereitzustellen.

Die Aufgabe im Hinblick auf die Mischeinrichtung wird erfindungsgemäss durch die Merkmale des Anspruchs 1 gelöst. Demnach verfügt die Dosiervorrichtung über eine Vorrichtung zum Dispergieren des Zusatzmittels in einem Trägermedium, so dass das Zusatzmittel im Trägermedium fein verteilt vorliegend in das Gemisch einbringbar ist.

Die Aufgabe bezüglich des Verfahrens wird entsprechend durch die Merkmale des unabhängigen Anspruchs 15 gelöst, wonach beim Zudosieren eines Zusatzmittels in ein pumpfähiges Gemisch das Zusatzmittel in einem Trägermedium dispergiert und anschliessend in das pumpfähige Gemisch eingebracht wird.

Weitere Aspekte der Erfindung sind Gegenstand weiterer unabhängiger Ansprüche. Besonders bevorzugte Ausführungsformen der Erfindung sind Gegenstand der abhängigen Ansprüche.

Unter einem pumpfähigen Gemisch wird im folgenden Zusammenhang insbesondere ein fliessfähiges und/oder schüttfähiges Gemisch aus wenigstens zwei unterschiedlichen Komponenten verstanden. Das Gemisch kann grundsätzlich gasförmige, flüssige und/oder feste Komponenten aufweisen. Insbesondere enthält das Gemisch ein Gemenge aus mehreren unterschiedlichen Feststoffen, welche optional mit einer Flüssigkeit vermischt sind. Besonders bevorzugt ist das Gemisch ein hydraulisch abbindendes Gemisch, zum Beispiel eine Trockenbetonzusammensetzung umfassend Gesteinskörnungen und Zement, oder eine Nassbetonzusammensetzung, enthaltend Gesteinskörnungen, Zement und Wasser. Im Besonderen liegt als Gemisch eine flüssige Spritzbetonzusammensetzung vor.

Das Trägermedium ist insbesondere eine Flüssigkeit und/oder ein Gas. Das Trägermedium kann z.B. eine wässrige Flüssigkeit, z.B. Wasser, sein. Besonders bevorzugt ist das Trägermedium ein Gas, insbesondere Pressluft oder Druckluft. Das Trägermedium wird insbesondere so gewählt, dass das Zusatzmittel nicht im Trägermedium lösbar ist.

Der Ausdruck "das Zusatzmittel im Trägermedium fein verteilt vorliegend" bedeutet insbesondere, dass das Zusatzmittel als disperse Phase im

Trägermedium als Dispersionsmedium vorliegt. Entsprechende Vorrichtungen und Verfahren zum Dispergieren des Zusatzmittels im Trägermedium sind dem Fachmann grundsätzlich bekannt. Je nach Anwendung sind beispielsweise Rührwerke, welche speziell für Dispergierverfahren ausgelegt sind, oder Zerstäuber geeignet. Die Vorrichtung zum Dispergieren des Zusatzmittels im Trägermedium oder ein Zerstäuber ist dabei insbesondere derart ausgebildet, dass ein in flüssiger Form vorliegendes Zusatzmittel in feine Tröpfchen zerteilt werden kann.

Unter einer "Förderleitung" wird in diesem Dokument grundsätzlich eine Vorrichtung zum Transport von Gasen, Flüssigkeiten und/oder Feststoffen verstanden. Die Förderleitung ist dabei insbesondere zum Transport von hydraulisch abbindendenden Gemischen, bevorzugt Spritzbetonzusammensetzungen, ausgelegt. Ein Innendurchmesser der Förderleitung beträgt mit Vorteil wenigstens 10 mm. Bevorzugt liegt der Innendurchmesser der Fördeleitung im Bereich von 20 - 300 mm, insbesondere 30-100 mm. Vorteilhaft umfasst die Förderleitung einen Rohrabschnitt mit einem kreiszylindrischen Querschnitt.

Gegenüber bekannten Vorrichtungen nach dem Stand der Technik wurde überraschenderweise gefunden, dass mit der erfindungsgemässen Mischeinrichtung bzw. dem erfindungsgemässen Verfahren eine homogenere Verteilung des Zusatzmittels im pumpfähigen Gemisch erreicht werden kann. Dies dürfte darauf zurückzuführen zu sein, dass die im Trägermedium fein verteilten Zusatzmittel effektiver und gleichmässiger im pumpfähigen Gemisch verteilen lassen.

Darüber hinaus wurde im Speziellen festgestellt, dass sich durch die Mischeinrichtung insbesondere beim Zudosieren von Zusatzmitteln zu Betonzusammensetzungen die Menge an Zusatzmittel bei gleichbleibender Wirkung signifikant reduzieren lässt. Beim Zudosieren von Erstarrungsbeschleunigern zu Spritzbetonmischungen unter Verwendung von Pressluft oder Druckluft als Trägermedium, konnte die zugegebene Menge bei wenigstens gleichbleibender Wirkung des Erstarrungsbeschleunigers beispielsweise um bis zu 20 - 30% reduziert werden. Somit lässt sich eine bedeutende Menge an Zusatzmitteln einsparen, was die Wirtschaftlichkeit klar steigert und auch aus umwelttoxikologischer Sicht vorteilhaft ist.

Im Ergebnis ermöglicht die erfindungsgemässe Mischeinrichtung bzw. das erfindungsgemässe Verfahren also eine effektivere Vermischung eines Zusatzmittels in einem pumpfähigen Gemisch.

Bevorzugt weist die Dosiervorrichtung eine mit der Förderleitung kommunizierende Mischkammer mit einem ersten Einlass zum Zuführen des Zusatzmittels und einem zweiten Einlass zum Zuführen des Trägermediums auf. Dadurch können das Zusatzmittel und das Trägermedium getrennt in die Mischkammer der Dosiervorrichtung zugeführt werden. Die getrennten Einlässe ermöglichen im Besonderen eine optimale Prozesssteuerung, da die beiden Komponenten kontrolliert in die für die Erzeugung der Dispersion vorgesehene Mischkammer zugegeben werden können.

Grundsätzlich ist es aber auch denkbar, Trägermedium und Zusatzmittel gemeinsam über einen einzigen Einlass in die Dosiervorrichtung einzubringen. Dies kann jedoch unter Umständen die Möglichkeiten bei der Erzeugung der Dispersion einschränken.

Die Mischkammer weist vorzugsweise einen die Förderleitung umgebenden ersten Abschnitt, insbesondere mit einem ringförmigen Hohlraum, auf. Dadurch kann das im Trägermedium fein verteilte Zusatzmittel beispielsweise über entsprechend angeordnete Kanäle, welche in die Förderleitung münden, rundum bzw. von allen Seiten in das pumpfähige Gemisch eingebracht werden. Dies verbessert die Mischwirkung zusätzlich.

Weiter beinhaltet die Mischkammer insbesondere einen in den ersten Abschnitt mündenden rohrförmigen zweiten Abschnitt, wobei insbesondere der zweite Abschnitt wenigstens teilweise gekrümmt ausgebildet ist. Der rohrförmige zweite Abschnitt der Mischkammer bildet dabei die Zuleitung zum ersten Abschnitt und bietet des Weiteren ausreichend Platz für die Vorrichtung zum Dispergieren des Zusatzmittels im Trägermedium. Die Kombination aus einen die Förderleitung umgebenden ersten Abschnitt und einem rohrförmigen zweiten Abschnitt ermöglich im Besonderen eine kompakte Bauweise bei zugleich optimaler Mischwirkung.

Es sind aber grundsätzlich auch andere Ausgestaltungen der Dosiervorrichtung möglich.

Besonders bevorzugt mündet der rohrförmige zweite Abschnitt der Mischkammer im Wesentlichen in einer tangentialen Richtung und/oder exzentrisch in den ersten Abschnitt, welcher im Besonderen einen ringförmigen Hohlraum umfasst. Dadurch kann das im Trägermedium dispergierte Zusatzmittel strömungstechnisch besonders vorteilhaft in den ringförmigen Hohlraum zugeführt und um die Förderleitung herum verteilt werden, was der Mischwirkung insgesamt zu Gute kommt.

Weiter ist die Vorrichtung zum Dispergieren des Zusatzmittels bevorzugt am ersten Einlass zum Zuführen des Zusatzmittels angeordnet und ragt wenigstens teilweise in den ersten Abschnitt der Mischkammer hinein. Mit Vorteil ist dabei der erste Einlass zum Zuführen des Zusatzmittels in einer Zufuhrrichtung vor dem zweiten Einlass zum Zuführen des Trägermediums angeordnet ist. Aufgrund einer solchen Anordnung lässt sich eine besonders effektive Vermischung des Zusatzmittels im Trägermedium erreichen, da das Trägermedium automatisch am Einlass für das Zusatzmittel vorbeibewegt wird und sich mit diesem mischt. Das Zusatzmittel wird entsprechend direkt in das vorbeibewegte Trägermedium hinein dispergiert, was wiederum die Vermischung verbessert. Darüber hinaus ergibt sich bei einer derartigen Anordnung eine besonders Platz sparende Bauweise.

Prinzipiell sind aber auch andere Anordnungen der Einlässe möglich, sofern dies zweckdienlich ist. Unter Umständen wird dabei aber die Vermischung von Trägermedium und Zusatzmittel erschwert.

Insbesondere sind der erste und der zweite Einlass so zueinander ausgerichtet, dass das Zusatzmittel und das Trägermedium in der Mischkammer aus unterschiedlichen Richtungen aufeinander treffen. Dies kann zum Beispiel erreicht werden, indem eine Längsmittelachse des ersten Einlasses gegenüber einer Längsmittelachse des zweiten Einlasses geneigt ist. Dadurch lässt sich das Zusatzmittel noch effektiver im Trägermedium verteilen. Ein Winkel zwischen den beiden unterschiedlichen Richtungen und/oder zwischen den Längsmittelachsen des ersten und des zweiten Einlasses beträgt dabei mit Vorteil 45 - 135°, insbesondere 85 - 95°.

Besonders vorteilhaft ist der erste Einlass zum Zuführen des Zusatzmittels in einer Krümmung des zweiten Abschnitts der Mischkammer angeordnet. Ein Krümmungswinkel des zweiten Abschnitts beträgt mit Vorteil 60 - 120°, insbesondere 85 - 95°. Bei einer derartigen Anordnung lässt sich das Zusatzmittel beispielsweise in einfacher Weise mit einer Geschwindigkeitskomponente in einer Bewegungsrichtung des Trägermediums und einer Geschwindigkeitskomponente senkerecht zum Trägermedium in dieses einbringen. Dies hat sich in Bezug auf eine möglichst gleichmässige Dispergierung des Zusatzmittels im Trägermedium im Allgemeinen als besonders vorteilhaft herausgestellt.

Grundsätzlich kann der erste Einlass aber auch in einem geraden Bereich der Mischkammer vorliegen.

Als Vorrichtung zum Dispergieren des Zusatzmittels ist mit Vorteil eine Zerstäuberdüse vorgesehen. Die Zerstäuberdüse ist insbesondere so ausgebildet, dass ein in flüssiger Form vorliegendes Zusatzmittel in feine Tröpfchen zerteilt werden kann. Mit einem Gas als Trägermedium kann so in effektiver Weise ein Aerosol bzw. ein Nebel gebildet werden kann. Als Zerstäuberdüsen sind dem Fachmann eine Vielzahl von möglichen Konstruktionen, wie z.B. Einstoff-, Zweistoff-, Pneumatik- oder Ultraschall-Zerstäuberdüsen bekannt.

Wie sich gezeigt hat bestehen zwischen den verschiedenen Typen von Zerstäuberdüsen im erfindungsgemässen Zusammenhang signifikante Unterschiede. Überraschend wurde dabei gefunden, dass insbesondere Zerstäuberdüsen in Form von Spiraldüsen ein besonders effektives Zerstäuben ermöglichen. Dies ganz besonders bei der Verwendung der erfindungsgemässen Mischeinheit zur Zudosierung von flüssigen Zusatzmitteln unter Verwendung von Pressluft als Trägermedium zu
Spritzbetonzusammensetzungen.

Eine Spiraldüse verfügt im Besonderen über eine Düsenöffnung in Form einer in Förderrichtung zulaufenden Spirale mit wenigstens einer Windung.

Eine geeignete Spiraldüse verfügt insbesondere über einen Sprühwinkel von 45 - 175°, bevorzugt 50 - 125°, weiter bevorzugt 50 - 95°, ganz besonders bevorzugt 55 - 65°. Vorteilhafterweise verfügt die Spiraldüse über einen vollkonischen Sprühstrahl. Mit anderen Worten ist die Spiraldüse mit Vorteil so ausgebildet, dass sie einen im Wesentlichen gleichmässigen konischen Sprühstrahl erzeugt. Eine Anzahl von Windungen der Spiraldüse beträgt mit Vorteil 1 - 6, im Besonderen 2-4. Ein Durchmesser einer zentralen Düsenbohrung oder eines freien Durchlasses der Spiraldüse beträgt dabei mit Vorteil 1 - 6 mm, bevorzugt 2 - 4 mm. Ein maximaler Durchmesser der Spiraldüse, insbesondere in einer Richtung quer zur Längsrichtung der Spiraldüse, liegt bevorzugt im Bereich von 5-30 mm, besonders bevorzugt 15-20 mm. Des Weiteren beträgt ein Verhältnis einer maximalen Länge zum maximalen Durchmesser der Spiraldüse in einer Richtung quer zur Längsrichtung 1.5:1 - 4:1, bevorzugt 2.5:1 - 3:1. Derartig ausgestaltete Spiraldüsen haben sich als besonders geeignet zum Dispergieren von flüssigen Zusatzmitteln in einem gasförmigen Trägermedium erwiesen. Dies im Besonderen beim Zudosieren von flüssigen Zusatzmitteln mit Pressluft als Trägermedium zu Spritzbetonzusammensetzungen.

Prinzipiell können aber auch anders ausgestaltetet Zerstäuberdüsen eingesetzt werden. Dies können z.B. Flachstrahldüsen, Nebeldüsen und/oder Zweistoffdüsen sein.

Es hat sich gezeigt, dass ein Verhältnis des Innendurchmessers des rohrförmigen zweiten Abschnitts der Mischkammer zu einem maximalen Durchmesser der Zerstäuberdüse, insbesondere einer Spiraldüse, mit Vorteil im Bereich von 1.25:1 - 10:1, bevorzugt 1.5:1 - 5:1, noch weiter bevorzugt 1.75:1 -2.25:1, liegt. Dadurch ergibt sich ein optimale Mischwirkung zwischen dem über die Zerstäuberdüse eintretenden Zusatzmittel und dem Trägermedium.

Weiter bevorzugt verfügt die Dosiervorrichtung über wenigstens einen unmittelbar in die Förderleitung mündenden Einlasskanal zum Einleiten des Zusatzmittels in das pumpfähige Gemisch, welcher so ausgebildet ist, dass eine Längsachse des Einlasskanals eine longitudinale Achse oder eine longitudinale Symmetrieachse der Förderleitung nicht schneidet. Mit anderen Worten durchstösst eine entlang der Längsmittelachse des wenigstens einen Einlasskanals verlaufende Gerade die Förderleitung in nicht-diametral gegenüberliegenden Punkten. Bei einer kreiszylindrischen Förderleitung verläuft der wenigstens eine Einlasskanal somit sekantenartig.

Der Einlasskanal verbindet dabei insbesondere die Förderleitung mit dem die Förderleitung umschliessenden ersten Abschnitt der Mischkammer. Aufgrund eines derartigen Einlasskanals verfügt das durch den Kanal in das pumpfähige Gemisch eintretende oder einströmende Zusatzmittel bezüglich der Förderleitung über eine tangentiale Geschwindigkeitskomponente, welche das in Längsrichtung durch die Fördeleitung bewegte Gemisch zusätzlich in Rotation versetzt. Diese Rotation um die longitudinale Symmetrieachse der Förderleitung führt dabei zu einer signifikanten Verbesserung der Mischwirkung der Mischeinheit.

Eine Dosiervorrichtung mit einem derartig ausgebildeten Einlasskanal verbessert auch unabhängig von einer Vorrichtung zum Dispergieren des Zusatzmittels im Trägermedium die Mischwirkung der Mischeinrichtung. Eine alternative Lösung der erfindungsgemässen Aufgabe besteht daher in einer Mischvorrichtung nach Anspruch 1, wobei anstelle der Vorrichtung zum Dispergieren des Zusatzmittels in einem Trägermedium wenigstens ein unmittelbar in die Förderleitung mündender Einlasskanal zum Einleiten des Zusatzmittels in das pumpfähige Gemisch vorliegt und wobei der wenigstens eine Einlasskanal so ausgebildet ist, dass eine Längsachse des Einlasskanals eine longitudinale Achse oder eine longitudinale Symmetrieachse der Förderleitung nicht schneidet.

Bevorzugt ist die Längsachse des wenigstens einen Einlasskanals in eine vorgesehenen Förderrichtung des Gemischs geneigt. Ein Neigungswinkel zwischen der Längsache des Einlasskanals und der Längsmittelachse der Förderleitung oder der vorgesehenen Förderrichtung beträgt dabei insbesondere 10 - 80°, bevorzugt 30 - 60°. Dadurch verfügt das durch den Einlasskanal in das pumpfähige Gemisch eintretende oder einströmende Zusatzmittel bezüglich der longitudinalen Symmetrieachse der Förderleitung über parallele Geschwindigkeitskomponente. Wie sich gezeigt hat, verbessert sich dadurch die Wirkung der Mischeinheit insgesamt. Grundsätzlich kann auf eine solche Neigung aber auch verzichtet werden.

In einer besonders bevorzugten Ausführungsform liegen mehrere Einlasskanäle vor, welche in regelmässiger Anordnung und insbesondere rotationssymmetrisch um die Förderleitung herum angeordnet sind. Solche Anordnungen ermöglichen eine besonders starke Rotation des Gemisches in der Förderleitung, was die Mischwirkung der Mischeinheit nochmals erheblich steigert.

Die erfindungsgemässe Mischeinheit ist besonders vorteilhaft als Bestandteil einer Vorrichtung zum Aufbringen von Spritzbeton. Derartige Vorrichtungen umfassen nebst der erfindungsgemässen Mischeinheit insbesondere eine Pumpvorrichtung für Spritzbeton sowie eine Spritzbetondüse. Die Mischeinrichtung ist dabei mit Vorteil zwischen der Pumpvorrichtung und der Spritzbetondüse angeordnet.

Grundsätzlich kann es auch vorteilhaft sein, eine erfindungsgemässe Mischeinheit mit einer in Förderrichtung anschliessenden Spritzbetondüse in einstückiger Bauweise vorzusehen. Dies vereinfacht die Handhabung und ermöglicht in einfacher Weise einen nahtlosen Übergang zwischen Mischeinheit und Spritzbetondüse, was unter Umständen das Strömungsverhalten verbessert.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Eine perspektivische Ansicht einer erfindungsgemässen Mischeinrichtung;
- Fig. 2: Eine Aufsicht auf das zufuhrseitige Ende der Mischeinrichtung aus Fig. 1 entlang der Förderrichtung in halbtransparenter Darstellung;
- Fig. 3: Eine Aufsicht auf die Mischeinrichtung aus Fig. 1 aus einer Richtung senkrecht zur Förderrichtung in halbtransparenter Darstellung;
- Fig. 4: Eine Detailansicht einer Spiraldüse, welche in der Mischeinrichtung aus Fig. 1 als Vorrichtung zum Dispergieren angeordnet ist;
- Fig. 5: Eine Detailansicht des zentralen hohlzylindrischen Rohrstücks der Mischeinrichtung aus Fig. 1;
- Fig. 6: Eine Detailansicht des äusseren hohlzylindrischen Rohrstücks der Mischeinrichtung aus Fig. 1 mit zwei diametral angeordneten und tangential vorstehenden Anschlussstutzen;
- Fig. 7: Eine Detailansicht eines L-förmigen Rohrstücks der Mischeinrichtung aus Fig. 1;
- Fig. 8: Eine schematische Darstellung einer Anordnung zum Austragen von Spritzbeton.

Grundsätzlich sind in den Figuren gleiche Teile mit gleichen Bezugszeichen versehen.

### Wege zur Ausführung der Erfindung

### 1. Mischeinrichtung

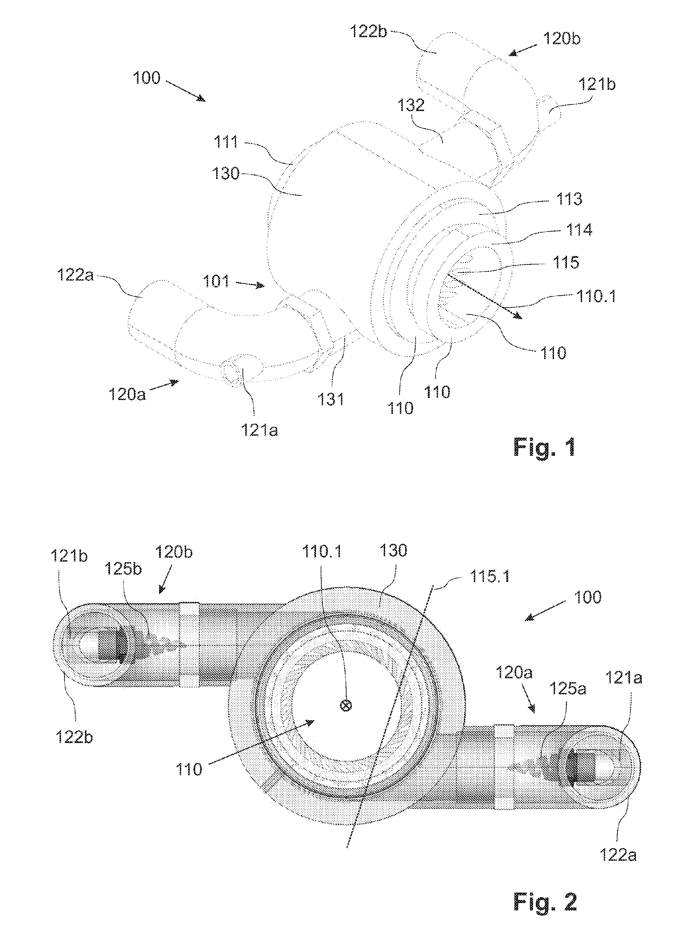

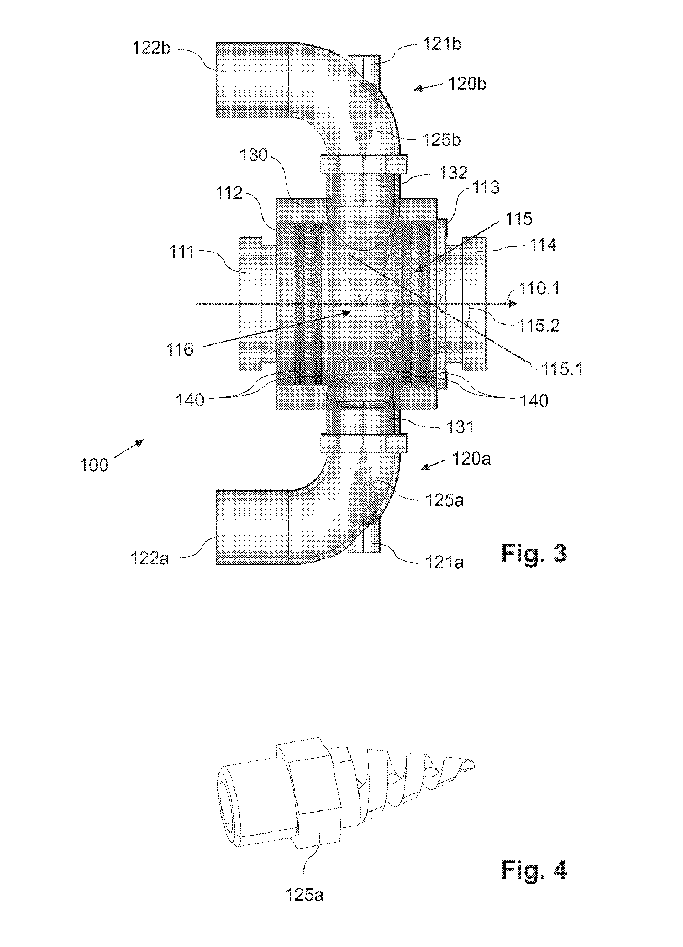

In den Fig. 1 - 3 ist eine erfindungsgemässe Mischeinrichtung 100 in verschiedenen Ansichten dargestellt. Bei den Darstellungen in den Fig. 2 und 3 sind die Bestandteile der Mischeinrichtung teilweise halbtransparent dargestellt, um den erfindungsgemässen Aufbau zu verdeutlichen. Einzelne Bestandteile der Mischeinrichtung sind zudem in den Fig. 4 - 7 im Detail abgebildet. Wo nicht anders angegeben, ist als Material für die Mischeinrichtung 100 zum Beispiel nicht-rostender Stahl geeignet.

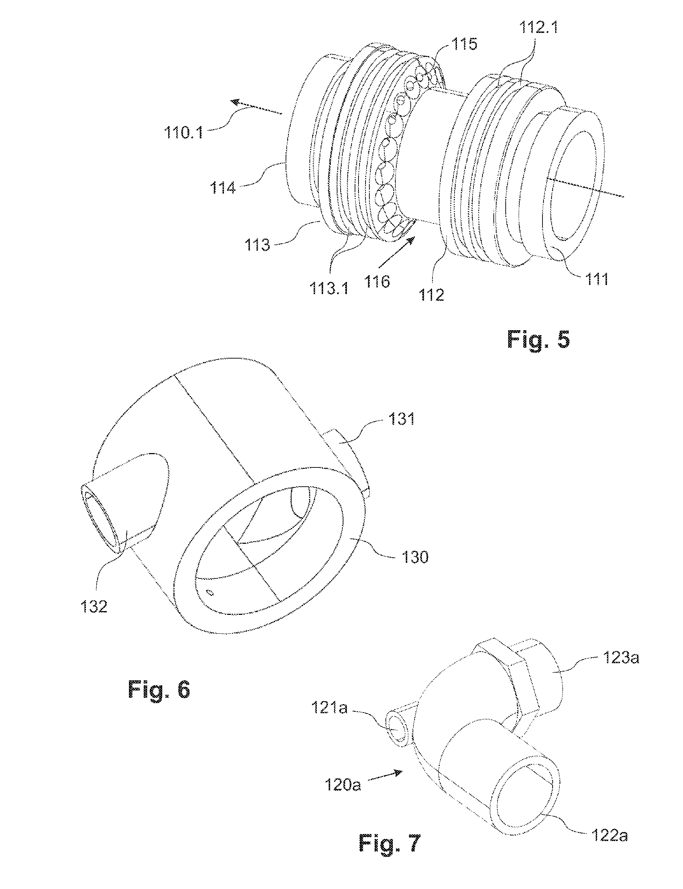

Die Mischeinrichtung 100 umfasst ein zentrales hohlzylindrisches Rohrstück 110 mit kreisförmigem Querschnitt, welches als Förderleitung für ein nicht dargestelltes pumpfähiges Gemisch, z.B. eine Spritzbetonzusammensetzung, fungiert (in Fig. 5 als Einzelteil dargestellt). Der Innendurchmesser des hohlzylindrischen Rohrstücks 110 misst zum Beispiel ca. 53 mm. Das zentrale hohlzylindrische Rohrstück 110 verfügt am zufuhrseitigen Ende der Mischeinrichtung über einen ersten auskragenden Anschlussflasch 111, beispielsweise zur Verbindung der Mischeinrichtung 100 mit einer Fördervorrichtung für ein pumpfähiges Gemisch.

Am anderen Ende der Mischeinrichtung, dem abfuhrseitigen Ende, ist entsprechend ein zweiter auskragender Anschlussflasch 114 angeordnet, welcher z.B. zum Verbinden der Mischeinrichtung 100 mit einer Verarbeitungsvorrichtung für das pumpfähige Gemisch, zum Beispiel eine Spritzbetondüse, dient. Zwischen den beiden Anschlussflanschen 111, 114 ist zudem ein zufuhrseitiger auskragender Dichtungsflansch 112 und ein abfuhrseitiger Dichtungsflansch 113 angeordnet. Die beiden Dichtungsflansche 112, 113 sind dabei beabstandet voneinander angeordnet, so dass zwischen den beiden Dichtungsflanschen 112, 113 ein im Wesentlichen ringförmiger Hohlraum 116 vorliegt. Die Durchmesser der beiden Dichtungsflansche 112, 113 sind jeweils grösser als die Durchmesser der Anschlussflansche 111, 114.

In den Mantelflächen der beiden Dichtungsflansche 112, 113 sind jeweils zwei beabstandete und ringförmig umlaufende Nuten 112.1, 113.1 eingelassen. In den Nuten 112.1, 113.1 liegen insgesamt vier Dichtungsringe 140, zum Beispiel O-Ringe aus Kunststoff, vor, welche aus der Mantelfläche der Dichtungsflansche 112, 113 hervorstehen.

Ausgehend von der zufuhrseitigen Stirnseite des abfuhrseitigen Dichtungsflansches 113 führen insgesamt 20 in regelmässigen Abständen und rotationssymmetrisch zur Längsmittelachse 110.1 des hohlzylindrischen Rohrstücks 110 angeordnete zylindrische Einlasskanäle 115 in den Hohlraum des zentralen hohlzylindrischen Rohrstücks 110. Eine Längsmittelachse 115.1 der Einlasskanäle verläuft dabei schiefwinklig zu einer radialen Richtung des hohlzylindrischen Rohrstücks 110 und schiefwinklig bezüglich der longitudinalen Symmetrieachse bzw. der Längsmittelachse 110.1 des hohlzylindrischen Rohrstücks 110. Die Neigungswinkel 115.2 zwischen den Längsmittelachsen 115.1 der Einlasskanäle 115 und der Längsmittelachse 110.1 des hohlzylindrischen Rohrstücks 110 betragen beispielsweise ca. 45°.

Die Längsmittelachsen 115.1 der Einlasskanäle 115 schneiden die Längsmittelachse 110.1 der Förderleitung somit nicht. Mit anderen Worten ausgedrückt, durchstossen die Längsmittelachsen 115.1 der Einlasskanäle die Förderleitung in nicht-diametral gegenüberliegenden Punkten des zentralen hohlzylindrischen Rohrstücks 110.

Die beiden Dichtungsflansche 112, 113 sind des Weiteren von einem äusseren hohlzylindrischen Rohrstück 130 umgeben (in Fig. 6 als Einzelteil dargestellt), welches innwendig satt an die vier Dichtungsringe 140 anliegt, so dass zwischen dem äusseren Rohrstück 130 und den beiden Dichtungsflanschen 112, 113 fluiddichte Verbindungen vorliegen. Das äussere Rohrstück 130 dichtet den Hohlraum 116 zwischen den beiden Dichtungsflanschen 112, 113 somit nach aussen fluiddicht ab. Der durch das äussere Rohrstück 130 abgedichtete Hohlraum 116 bildet dabei einen ersten ringförmigen Abschnitt einer Mischkammer der Mischeinrichtung 100.

Das äussere Rohrstück 130 verfügt des Weiteren über zwei diametral gegenüberliegende und in tangentialer Richtung bzw. exzentrisch in den Hohlraum 116 zwischen den beiden Dichtungsflanschen 112, 113 mündende rohrförmige Anschlussstutzen 131, 132. Am einen Anschlussstutzen 131 des äusseren Rohrstück 130 ist ein erstes L-förmig bzw. rechtwinklig gekrümmtes Rohrstück 120a fluiddicht mit einem Innendurchmesser von beispielsweise ca. 33 mm angebracht (in Fig. 7 als Einzelteil dargestellt). Die Verbindung erfolgt z.B. durch Verschraubung eines endseitig am gekrümmten Rohrstück 120a ausgebildeten Aussengewindes 123a in einem im Anschlussstutzen 131 vorliegenden Innengewinde.

In der Krümmung des ersten gekrümmten Rohrstücks 120a ist ein erster Einlass 121 a, beispielsweise zum Zuführen eines Zusatzmittels, angeordnet. Der erste Einlass 121 a mündet dabei in der Richtung des ersten Anschlussstutzens 131 in das erste gekrümmte Rohrstück 120a. Das offene

Ende des ersten gekrümmten Rohrstücks 120a bildet einen zweiten Einlass 122a, beispielsweise zum Zuführen eines Trägermediums.

Der erste Einlass 121 a ist im Innern des ersten gekrümmten Rohrstücks 120a mit einer Spiraldüse 125a versehen, welche als Vorrichtung zum Dispergieren eines Zusatzmittels dient. Die Spiraldüse weist dabei eine konisch zulaufende umhüllende Form auf und kann beispielsweise am inneren Ende des Einlasses 121 a verschraubt werden (in Fig. 4 als Einzelteil dargestellt). Die Spiraldüse 125a verfügt zum Beispiel über 3 Windungen, über eine Sprühwinkel von beispielsweise ungefähr 60°, einen maximalen Durchmesser quer zur Längsrichtung von ca. 18 mm und eine Gesamtlänge von ca. 48 mm.

Am anderen Anschlussstutzen 132 des äusseren Rohrstücks 130 ist ein zweites L-förmig bzw. rechtwinklig gekrümmtes Rohrstück 120b angebracht. Das zweite gekrümmtes Rohrstück 120b ist im Wesentlichen baugleich mit dem ersten gekrümmten Rohstück 120a und verfügt entsprechend einen ersten Einlass 121 b, einen zweiten Einlass 122b und eine Spiralüse 125b.

Die beiden gekrümmten Rohrstücke 120a, 120b bilden zusammen einen zweiten rohrförmigen Abschnitt der Mischkammer der Mischeinrichtung 100. Die Mischkammer der Mischeinrichtung 100 besteht somit aus den beiden gekrümmten Rohrstücken 120a, 120b und dem ringförmigen Hohlraum 116.

Die den Innenraum des hohlzylindrischen Rohrstücks 110 bzw. die Förderleitung umgebenden Elemente bilden zusammen die Dosiervorrichtung 101 der Mischeinrichtung 100. Mittels der Dosiervorrichtung 101 kann ein Zusatzmittel in einem Trägermedium dispergiert und in ein im Innenraum des hohlzylindrischen Rohrstücks 110 gefördertes pumpfähiges Gemisch zudosiert werden kann.

### 2. Vorrichtung zum Auftragen von Spritzbeton

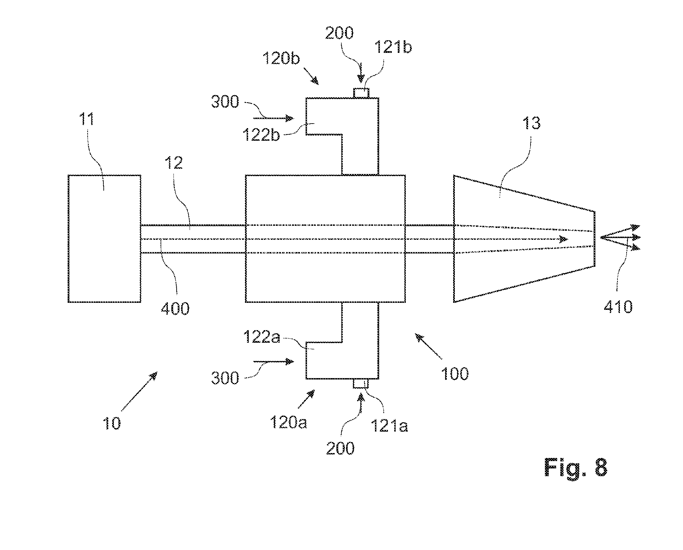

In Fig. 8 ist eine Spritzbetonauftragvorrichtung 10 schematisch dargestellt. Diese umfasst eine Pumpvorrichtung 11, welche über eine Leitung 12 zum Fördern einer Spritzbetonzusammensetzung 400 an den ersten Anschlussflansch 111 der erfindungsgemässen Mischvorrichtung 100 aus den Fig. 1 - 3 angeschlossen ist. Der zweite Anschlussstutzen 114 der

Mischvorrichtung ist wiederum über eine Leitung oder direkt an eine Spritzbetondüse 13 angeschlossen. Die Spritzbetonzusammensetzung 400 kann prinzipiell eine Trockenspritzbetonzusammensetzung oder eine Nassspritzbetonzusammensetzung sein. Die Förderung erfolgt je nach Spritzbetonzusammensetzung 400 und Anwendung in an sich bekannter Weise, z.B. im Dichtstrom- oder Dünnstromverfahren.

Über die beiden ersten Einlässe 121 a, 121 b der Mischvorrichtung 100 und darin angeordneten Spiraldüsen 125a, 125b kann in den beiden gekrümmten Rohrstücken 120a, 120b beispielsweise ein flüssiges Zusatzmittel 200, insbesondere ein Erstarrungsbeschleuniger, dispergiert werden. Über die beiden zweiten Einlässe 122a, 122b kann zudem ein Trägermedium 300, z.B. Pressluft zugeführt werden, so dass in der Mischkammer bzw. in den beiden gekrümmten Rohstücken 120a, 120b und dem ringförmigen Hohlraum 116 der Mischeinrichtung 100 ein Aerosol aus Zusatzmittel 200 und Trägermedium 300 vorliegt. Dieses gelangt nun über die Einlasskanäle 115 in das Innere des zentralen zylindrischen Rohrstücks 110 bzw. in die darin geförderte Spritzbetonzusammensetzung 400. Die mit dem Zusatzmittel 200 und dem Trägermedium vermischte Spritzbetonzusammensetzung 410 kann anschliessend über die Spritzbetondüse 13 an einer vorgesehenen Stelle, zum Beispiel an einer Tunnelwand, appliziert werden. Die Zufuhr des Zusatzmittels 200 und des Trägermediums 300 bis zu den zugehörigen Einlässen 121 a, 121 b, 122a, 122b kann in an sich bekannter Weise erfolgen.

Die vorstehend beschriebenen Ausführungsformen sind jedoch lediglich als illustrative Beispiele zu verstehen, welche im Rahmen der Erfindung beliebig abgewandelt werden können.

So ist es zum Beispiel möglich, die zweiten Anschlussstutzen 132 mit dem zweiten gekrümmten Rohrstück 120b wegzulassen, so dass der Anschlussstutzen 131 als einziger Anschlussstutzen vorliegt. Ebenso können falls erforderlich zusätzliche Anschlussstutzen am äusseren Rohrstück 130 und/oder in einem der gekrümmten Rohrstücke 120a, 120b vorgesehen werden.

Zusätzlich oder anstelle der Spiraldüsen 125a, 125b können prinzipiell auch andere Vorrichtungen zum Dispergieren eingesetzt werden, wie sie zum Beispiel vorstehen beschrieben wurden.

Ebenso kann eines oder beide der gekrümmten Rohrstücke 120a, 120b beispielsweise durch ein herkömmliches T-förmiges Rohstück ersetzt werden, falls dies zweckdienlich erscheint. In diesem Fall können die jeweiligen Rohrenden des T-förmigen Rohrstücks als Einlässe für das Zusatzmittel und das Trägermedium dienen, was unter Umständen die Herstellung vereinfacht.

Auch möglich ist es, zusätzlich oder anstelle zu den vorliegenden Einlasskanälen 115 weitere Einlasskanäle vorzusehen, welche beispielsweise in radialer Richtung bezüglich des zentralen hohlzylindrischen Rohrstücks 110 verlaufen und/oder in einer die Längsmittelachse 110.1 schneidenden Richtung ausgebildet sind.

Anstelle des zentralen hohlzylindrischen Rohrstücks 110 kann auch eine anders ausgebildete Förderleitung für das pumpfähige Gemisch vorliegen, zum Beispiel mit ovalem Querschnitt.

### 3. Anwendungsbeispiele

Zu Vergleichszwecken wurden verschiedene Nassspritzbetonversuche mit und ohne die erfindungsgemässe Mischeinrichtung 100 aus den Fig. 1 - 3 durchgeführt.

Für die erfindungsgemässen Versuche kam eine herkömmliche Spritzbetonmaschine AMV 6400 von Andersen Mekaniska Verkstad AS (Norwegen) zum Auftragen von Nassspritzbeton zur Anwendung, welche unmittelbar vor der Spritzbetondüse mit einer erfindungsgemässe Mischeinrichtung 100 aus den Fig. 1 - 3 bestückt wurde. Diese Anordnung entspricht prinzipiell der in Fig. 8 dargestellten Spritzbetonauftragvorrichtung 10. Über die ersten Einlässe 121 a, 121 b wurde dabei ein flüssiger Erstarrungsbeschleuniger und über die zweiten Einlässe 122a, 122b der Mischeinrichtung 100 Druckluft unter üblichen Bedingungen zugeführt.

Die Spritzbetonmaschine wurde mit folgenden Parametern betrieben:
- Spritzbetonförderleistung: ca. 30 m³/h
- Druckluftförderleistung ca. 16 m³/h
- Druck der Druckluft: 7.0 - 7.5 bar
- Pumpleistung Erstarrungsbeschleuniger: ca. 30 l/min
- Pumpendruck Erstarrungsbeschleuniger: max. 18 bar
Für die Vergleichsversuche wurde die Selbe Anordnung wie bei den erfindungsgemässen Versuchen eingesetzt, wobei aber anstelle der Mischvorrichtung 100 eine herkömmliche Mischeinrichtung eingesetzt wurde. Bei der herkömmlichen Mischeinrichtung wurde der Erstarrungsbeschleuniger ohne zusätzliche Massnahmen über einen Anschlussstutzen der Druckluft zugeführt und direkt in den Nassspritzbeton gegeben. Die übrigen Versuchsbedingungen blieben im Wesentlichen unverändert.

Nassspritzbeton wurde in folgender Zusammensetzung eingesetzt:
- Portlandkalksteinzement vom Typ CEM II/A-LL 42.5 R; Anteil: 500 kg/m³
- Silicagehalt: 20 kg/m³
- Zuschlagstoffe: 82% Brechsand 0-4 mm, 18% Kies 4-8 mm
- Wasser/Zement-Verhältnis: 0.43
- Fliessmittel: Sikament EVO 26S, 0.40% bezogen auf Zementgehalt
- Konsistenzregler: Sika Tard 930, 0.30% bezogen auf Zementgehalt
- Luftporenbildner: Sika Aer-S, 0.06 % bezogen auf Zementgehalt
- Setzmass: 200 - 210 mm

Als Erstarrungsbeschleuniger wurde bei allen Versuchen Sigunit L53 AF (Sika) verwendet.

Zur Bestimmung der Qualität des auf eine Versuchsfläche aufgespritzten Betons wurde die Festigkeitsentwicklung in an sich bekannter Weise durch Penetrationsnadeln (Proctor; 30 und 60 Minuten nach dem Auftragen) und das HILTI-Setzbolzenverfahren (HILTI 460; 4 Stunden nach dem Auftragen) bestimmt.

In der folgenden Tabelle 1 sind die durchgeführten Versuche zusammengestellt. Der Anteil des Erstarrungsbeschleunigers Sigunit L53 AF ist dabei in Gew.-% bezogen auf den Zementgehalt angegeben. In der Spalte "Zugabe" ist angegeben, ob die erfindungsgemässe Mischeinrichtung (E) oder die herkömmliche Mischeinrichtung (H) eingesetzt wurde.

**Tabelle 1:**

| **Nr.** | **Anteil Sigunit L53 AF** | **Zugabe** | **Festigkeit in MPa nach** | | |
|---|---|---|---|---|---|
| | | | **30 min** | **60 min** | **4h** |
| 1 | 5% | H | 0.16 | 0.40 | 3.3 |
| 2 | 8% | H | 0.24 | 0.67 | 4.1 |
| 3 | 11% | H | 0.47 | 0.86 | 4.7 |
| 4 | 4% | E | 0.38 | 0.74 | 3.8 |
| 5 | 6.5% | E | 0.62 | 0.82 | 4.6 |
| 6 | 8.5% | E | 0.61 | 0.92 | 5.2 |

Die Versuche 1 - 3, welche mit einer herkömmlichen Mischeinrichtung durchgeführt wurden, zeigen dass der Anteil des Erstarrungsbeschleunigers die Festigkeit des aufgetragenen Spritzbetons beeinflusst. Je höher der Beschleunigeranteil, desto höher im Allgemeinen die Festigkeiten bei den betrachteten Zeiten. Ein entsprechendes Bild ergibt sich auch aus den Versuchen 4 - 6 bei Verwendung der erfindungsgemässen Mischeinrichtung.

Im Besonderen fällt jedoch auf, dass mit der erfindungsgemässen Mischeinrichtung bei geringerem Anteil an Beschleuniger höhere Festigkeiten erreicht werden. So wird beispielsweise gemäss Versuch 1 mit der herkömmlichen Mischeinrichtung bei einem Anteil von 5% an Beschleuniger nach 30 Minuten eine Festigkeit von lediglich 0.16 MPa erhalten. Unter Verwendung der erfindungsgemässen Mischeinrichtung wird in Versuch 4 bei einem sogar leicht geringeren Anteil an Beschleuniger von 4% nach 30 Minuten eine mehr als doppelt so hohe Festigkeit von 0.38 MPa erreicht. Auch nach 60 Minuten und 4 Stunden liegen die Festigkeiten bei Versuch 4 mit der erfindungsgemässen Mischeinrichtung deutlich über den entsprechenden Festigkeiten aus Versuch 1. Ein Vergleich der Versuche 2 und 5 sowie 3 und 6 bestätigt diese Beobachtungen.

Zusammenfassend ist festzustellen, dass die Zugabe des Erstarrungsbeschleunigers unter Verwendung der erfindungsgemässen Mischeinrichtung den Verbrauch an Erstarrungsbeschleuniger bei gleich bleibender oder verbesserter Qualität des Spritzbetons signifikant reduziert.

## Patentansprüche

1. Mischeinrichtung (100) zur Zudosierung eines Zusatzmittels (200) in ein pumpfähiges Gemischs (400), insbesondere ein pumpfähiges hydraulisch abbindendes Gemisch, im besonderen in eine flüssige Spritzbetonzusammensetzung, wobei die Mischeinrichtung (100) eine Förderleitung (110) zur Förderung des Gemischs (400) durch die Mischeinrichtung (100) aufweist, und eine mit der Förderleitung (110) kommunizierende Dosiervorrichtung (101) zum Einbringen des Zusatzmittels (200) in das Gemisch (400) angeordnet ist, **dadurch gekennzeichnet, dass** die Dosiervorrichtung (101) über eine Vorrichtung (125a, 125b) zum Dispergieren des Zusatzmittels (200) in einem Trägermedium (300) verfügt, so dass das Zusatzmittel (200) im Trägermedium (300) fein verteilt vorliegend in das Gemisch (400) einbringbar ist.

2. Mischeinrichtung nach Anspruch 1, **dadurch gekennzeichnet, dass** die Dosiervorrichtung (101) eine mit der Förderleitung (110) kommunizierende Mischkammer (116, 120a, 120b) mit einem ersten Einlass (121 a, 121 b) zum Zuführen des Zusatzmittels (200) und einem zweiten Einlass (122a, 122b) zum Zuführen des Trägermediums (300) aufweist.

3. Mischeinrichtung nach Anspruch 2, **dadurch gekennzeichnet, dass** die Mischkammer einen die Förderleitung (110) umgebenden ersten Abschnitt (116), insbesondere mit einem ringförmigen Hohlraum, aufweist und einen in den ersten Abschnitt (116) mündenden rohrförmigen zweiten Abschnitt (120a, 120b) beinhaltet, wobei insbesondere der zweite Abschnitt (120a, 120b) wenigstens teilweise gekrümmt ausgebildet ist.

4. Mischeinrichtung nach Anspruch 3, **dadurch gekennzeichnet, dass** der rohrförmige zweite Abschnitt (120a, 120b) der Mischkammer im Wesentlichen in einer tangentialen Richtung und/oder exzentrisch in den ringförmigen Hohlraum (116) mündet.

5. Mischeinrichtung nach einem der Ansprüche 2 - 4, **dadurch gekennzeichnet, dass** die Vorrichtung (125a, 125b) zum Dispergieren des Zusatzmittels am ersten Einlass (121 a, 121 b) zum Zuführen des Zusatzmittels angeordnet ist und insbesondere wenigstens teilweise in die Mischkammer (120a, 120b) hinein ragt.

6. Mischeinrichtung nach einem der Ansprüche 2 - 5, **dadurch gekennzeichnet, dass** der erste Einlass (121 a, 121 b) zum Zuführen des Zusatzmittels in einer Zufuhrrichtung vor dem zweiten Einlass (122a, 122b) zum Zuführen des Trägermediums angeordnet ist.

7. Mischeinrichtung nach einem der Ansprüche 3 - 6, **dadurch gekennzeichnet, dass** der erste Einlass (121 a, 121 b) zum Zuführen des Zusatzmittels in einer Krümmung des zweiten Abschnitts (120a, 120b) der Mischkammer angeordnet ist.

8. Mischeinrichtung nach einem der vorangehenden Ansprüche, **dadurch gekennzeichnet, dass** die Vorrichtung (125a, 125b) zum Dispergieren des Zusatzmittels eine Zerstäuberdüse, insbesondere eine Spiraldüse, ist.

9. Mischeinrichtung nach Anspruch 8, **dadurch gekennzeichnet, dass** die Zerstäuberdüse eine Spiraldüse (125a, 125b) mit einem Sprühwinkel von 45 - 175°, bevorzugt 50 - 95°, weiter bevorzugt 55 - 65°, ist.

10. Mischeinrichtung nach einem der vorangehenden Ansprüche, **dadurch gekennzeichnet, dass** die Dosiervorrichtung (101) über wenigstens einen unmittelbar in die Förderleitung (110) mündenden Einlasskanal (115) zum Einleiten des Zusatzmittels in das pumpfähige Gemisch verfügt, wobei der Einlasskanal (115) so ausgebildet ist, dass eine Längsachse (115.1) des Einlasskanals (115) eine longitudinalen Symmetrieachse (110.1) der Förderleitung (110) nicht schneidet.

11. Mischeinrichtung nach Anspruch 10, **dadurch gekennzeichnet, dass** die Längsachse (115.1) des wenigstens einen Einlasskanals (115) in eine vorgesehene Förderrichtung (110.1) des pumpfähigen Gemischs geneigt ist, wobei ein Neigungswinkel (115.2) zwischen der Längsache (115.1) des Einlasskanals (115) und der vorgesehenen Förderrichtung (110.1) insbesondere 10- 80°, bevorzugt 30 - 60°, beträgt.

12. Mischeinrichtung nach einem der Ansprüche 10-11, **dadurch**
**gekennzeichnet** mehrere Einlasskanäle (115) vorliegen, welche in regelmässiger Anordnung, und insbesondere rotationssymmetrisch, um die Förderleitung (110) herum angeordnet sind.

13. Vorrichtung zum Aufbringen von Spritzbeton, umfassend eine Mischeinrichtung (100) nach einem der Ansprüche 1-12, sowie insbesondere eine Pumpvorrichtung (11) für Spritzbeton und eine Spritzbetondüse (13).

14. Verwendung einer Mischvorrichtung (100) nach einem der Ansprüche 1 - 12 zum Zudosieren von Zusatzmitteln (200) in ein pumpfähiges Gemisch (400) insbesondere in ein pumpfähiges hydraulisch abbindendes Gemisch, besonders bevorzugt in eine flüssige Spritzbetonzusammensetzung.

15. Verfahren zum Zudosieren eines Zusatzmittels (200) in ein pumpfähiges Gemisch (400), insbesondere in ein hydraulisch abbindendes Gemisch, bevorzugt eine Spritzbetonzusammensetzung, **dadurch gekennzeichnet, dass** das Zusatzmittel (200) in einem Trägermedium (300) dispergiert und anschliessend in das Gemisch (400) eingebracht wird.

16. Verfahren nach einem der Ansprüche 15-16, **dadurch gekennzeichnet, dass** das Trägermedium (300) ein Gas ist, insbesondere Luft, und/oder dass das Zusatzmittel (200) eine Flüssigkeit, insbesondere ein Erstarrungsbeschleuniger, ist.
